# EUROPEAN PATENT APPLICATION

(11) **EP 2 879 048 A1**
(43) Date of publication of application: **03.06.2015**
(21) Application number: 14173547.2
(22) Date of filing: 23.06.2014
(51) Int. Cl.: G06F 9/44

(54) **Display apparatus, server and control method thereof**

(30) Priority: 27.11.2013 KR 20130145368
(71) Applicant: Samsung Electronics Co., Ltd, Gyeonggi-do 443-742 (KR)
(72) Inventor: Lee, Sang-hee, Gyeonggi-do (KR); Seo, Dae-won, Jeollabuk-do (KR)
(74) Representative: Appleyard Lees

(57) **Abstract**

Disclosed are a display apparatus, a server, and control methods thereof. The display apparatus includes an image processor image configured to process an image; a display configured to display the processed image; a communicator configured to communicate with a server; a user input receiver configured to receive an input from a user; and a controller configured to display a first user interface (UI) containing a plurality of items, receive information about a second UI corresponding to at least one item determined by a use pattern of the user among the plurality of items from the server, and when an item included in the at least one item is selected according to the input from the user, display the second UI corresponding to the selected item based on the received information.

## Description

### BACKGROUND

### Field

Apparatuses and methods consistent with exemplary embodiments relate to a display apparatus, a server, and control methods thereof, and more particularly, to a display apparatus which receives information about a user interface (UI) corresponding to an item selected by a user from a server and displays the UI, a server, and control methods thereof.

### Description of the Related Art

A display apparatus such as a television (TV) or the like displays a first user interface (UI) containing at least one item to provide information to a user and receives an input. When a user selects an item contained in the first UI, the display apparatus displays a second UI corresponding to the selected item. The display apparatus receives information about the second UI from a server connected through a network and displays the second UI based on the received information. In this case, when a user selects the item contained in the first UI, the display apparatus requests the server to provide the information about the second UI corresponding to the selected item and receives the requested information about the second UI from the server, thereby displaying the second UI based on the received information. However, it requires time for the display apparatus to receive the information from the server through the network. In some circumstances, a longer time may be required to receive the requested information about the second UI. In this case, it may be inconvenient for a user since the user cannot instantly view the second UI of the selected item.

### SUMMARY

One or more exemplary embodiments may provide a display apparatus, a server, and control methods thereof, in which a user interface (UI) corresponding to an item selected by a user may be more quickly displayed, thereby improving a user's convenience.

According to an aspect of an exemplary embodiment, there is provided a display apparatus including: an image processor image configured to process an image; a display configured to display the processed image; a communicator configured to communicate with a server; a user input receiver configured to receive an input from a user; and a controller configured to display a first user interface (UI) containing a plurality of items, receive information about a second UI corresponding to at least one item determined by a use pattern of the user among the plurality of items from the server, and when an item included in the at least one item is selected according to the input from the user, display the second UI corresponding to the selected item based on the received information.

The at least one item determined by the use pattern may include an item relatively frequently selected by the user among the plurality of items.

The plurality of items may be provided in a form of a menu, and the at least one item determined by the use pattern may include an item included in a menu having a form preferred by the user.

The display apparatus may perform a plurality of functions, and the at least one item determined by the use pattern may include an item of a function preferred by the user.

The first UI and the second UI may respectively include information about contents, and the at least one item determined by the use pattern may include an item of contents preferred by the user.

The communicator may transmit identification information to the server, and receive information about the use pattern of the user from the server, and the controller may determine the at least one item based on the received information about the use pattern.

According to an aspect of another exemplary embodiment, there is provided a method of controlling a display apparatus, the method including: displaying a first user interface (UI) containing a plurality of items on a display; receiving information about a second UI corresponding to at least one item determined by a use pattern of a user among the plurality of items from the server; receiving an input from the user to select an item included in the at least one item; and displaying the second UI corresponding to the selected item based on the received information.

The at least one item determined by the use pattern may include an item relatively frequently selected by the user among the plurality of items.

The plurality of items may be provided in a form of a menu, and the at least one item determined by the use pattern includes an item included in a menu having a form preferred by the user.

The display apparatus may perform a plurality of functions, and the at least one item determined by the use pattern may include an item of function preferred by the user.

The first UI and the second UI may respectively include information about contents, and the at least one item determined by the use pattern may include an item of contents preferred by the user.

The method of controlling the display apparatus may further include: transmitting identification information of the user to the server; receiving information about the use pattern of the user from the server; and determining the at least one item based on the received information about the use pattern.

According to an aspect of still another exemplary embodiment, there is provided a server including: a communicator configured to communicate with a display apparatus; and a controller configured to transmit information about a first user interface (UI) containing a plurality of items to the display apparatus, and in response to a request from the display apparatus for information about a second UI corresponding to at least one item determined by a use pattern of a user among the plurality of items, transmit the information about the second UI to the display apparatus.

The at least one item determined by the use pattern may include an item relatively frequently selected by the user among the plurality of items.

The plurality of items may be provided in a form of a menu, and the at least one item determined by the use pattern may include an item included in a menu having a form preferred by the user.

The display apparatus may perform a plurality of functions, and the at least one item determined by the use pattern may include an item of a function preferred by the user.

The first UI and the second UI may respectively include information about contents, and the at least one item determined by the use pattern may include an item of contents preferred by the user.

The controller may control the communicator to receive identification information of the user from the display apparatus, and transmit information about the use pattern of the user to the display apparatus.

According to an aspect of still another exemplary embodiment, there is provided a method of controlling a server, the method including: transmitting information about a first user interface (UI) containing a plurality of items to a display apparatus; receiving a request for information about a second UI corresponding to at least one item determined by a use pattern of a user among the plurality of items from the display apparatus; and transmitting the second UI to the display apparatus.

The at least one item determined by the use pattern may include an item relatively frequently selected by the user among the plurality of items.

The plurality of items may be provided in a form of a menu, and the at least one item determined by the use pattern may include an item included in a menu having a form preferred by the user.

The display apparatus may perform a plurality of functions, and the at least one item determined by the use pattern may include an item of a function preferred by the user.

The first UI and the second UI may respectively include information about contents, and the at least one item determined by the use pattern may include an item of contents preferred by the user.

The method of controlling the server may further include: receiving identification information of the user from the display apparatus; and transmitting information about the use pattern of the user to the display apparatus.

According to an aspect of still another exemplary embodiment, there is provided a display apparatus including: a storage configured to store a plurality of user interfaces; and a controller configured to request, from a server, a second user interface (UI) corresponding to a candidate item to be selected by a user on a first UI and store, in the storage, the second UI to be provided in response to a user selection of the candidate item on the first UI, wherein the candidate item is determined based on a previous user selection.

According to an aspect of still another exemplary embodiment, there is provided a method of controlling a display apparatus, the method including: requesting, to a server, a second user interface (UI) corresponding to a candidate item to be selected by a user on a first UI; and storing, in a storage, the second UI to be provided in response to a user selection of the candidate item on the first UI, wherein the candidate item is determined based on a previous user selection.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 shows a display apparatus according to an exemplary embodiment;
FIG. 2 is a block diagram of a display apparatus according to an exemplary embodiment;
FIGS. 3 and 4 are flowcharts showing an operation of a display apparatus according to exemplary embodiments;
FIG. 5 is a block diagram of a server according to an exemplary embodiment;
FIGS. 6 and 7 are flowcharts showing an operation of a server according to exemplary embodiments; and
FIG. 8 shows an example of a first user interface (UI) displayed by a display apparatus according to an exemplary embodiment.

### DETAILED DESCRIPTION

Below, exemplary embodiments will be described in detail with reference to accompanying drawings.

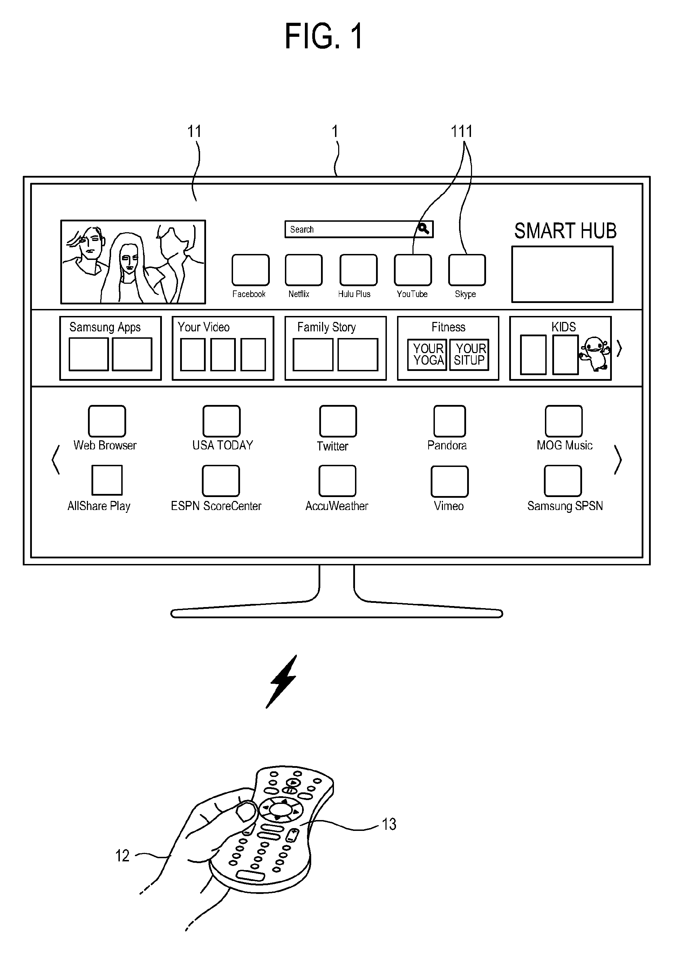

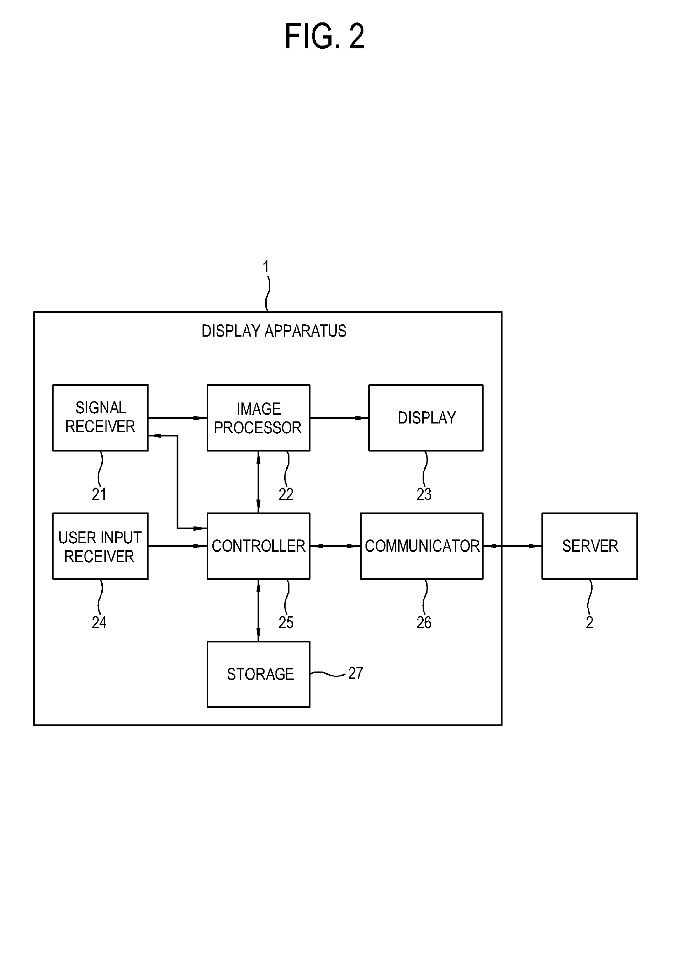

FIG. 1 shows a display apparatus according to an exemplary embodiment. A display apparatus 1 may, for example, be achieved by a television (TV). The display apparatus 1 displays a first user interface (UI) 11 containing a plurality of items 111 to provide information to a user 12 and receive an input from the user 12. The user 12 may use a remote controller 13 or the like to select an item among the plurality of items 111 contained in the first UI 11. When the user 12 selects an item among the plurality of items 111 contained in the first UI 11, the display apparatus 1 displays a second UI corresponding to the selected item. The first UI 11 and the second UI may be displayed as a separate page. The display apparatus 1 may be connected to a server 2 (refer to FIG. 2) through a network. The display apparatus 1 receives information about the second UI corresponding to the item selected by the user 12 from the server 2, and displays the second UI based on the received information. Here, the display apparatus 1 may receive in advance the information about the second UI from the server 2 before the user 12 selects the item contained in the first UI 11. For example, the display apparatus 1 may receive in advance, from the server 2, the information about the second UI corresponding to at least an item, which has a higher probability of being selected by a user among the plurality of items 111 contained in the first user interface (UI) 11 based on a use pattern of the user in the first UI 11. When the user 12 selects an item contained in the first UI 11, the display apparatus 1 may promptly display the second UI corresponding to the selected item based on the information about the second UI received in advance. Thus, according to an exemplary embodiment, the display apparatus 1 may in advance receive the information about the second UI to be displayed from the server 2, thereby reducing time required to display the second UI corresponding to the selected item when the user 12 selects an item contained in the first UI 11. Accordingly, a user's convenience may be improved.

FIG. 2 is a block diagram of a display apparatus according to an exemplary embodiment. According to an exemplary embodiment, the display apparatus 1 includes a signal receiver 21, an image processor 22, a display 23, a user input receiver 24, a communicator 26 and a controller 25. The signal receiver 21 receives an image signal. The signal receiver 21 may receive an image signal based on broadcasting through a broadcasting system. Alternatively, the signal receiver 21 may receive an image signal from an electronic device such as a digital versatile disc (DVD) player, a personal computer (PC), a set-top box, etc.; an image signal from a server through an Internet or the like network; an image signal from a wirelessly connected portable terminal such as a smart phone, a smart pad, etc.; or an image signal from a storage device such as a universal serial bus (USB) storage medium, etc.

The image processor 22 processes the image signal received by the signal receiver 21. The image processor 22 processes an image signal about the first UI 11 and an image signal about the second UI. The display 23 displays an image based on the image signal processed by the image processor 22. The display 23 may display an image. The display 23 may include various types such as, for example, a liquid crystal display (LCD), a plasma display panel (PDP), an organic light emitting diode (OLED), etc.

The user input receiver 24 receives an input of the user 12. The user input receiver 24 may be provided in a main body of the display apparatus 1 and have at least one button for receiving the input of the user 12. Further, the user input receiver 24 may include a remote controller signal receiver to receive a remote controller signal containing information about an input of the user 12 from the remote controller 13.

The communicator 26 communicates with the server 2 through the network. There is no limit to the types of the network, and the network may include a wired network and a wireless network. There is no limit to the types of communication performed by the communicator 26.

The controller 25 displays the first UI containing the plurality of items on the display 23, receives the information about the second UI corresponding to at least one item determined by a user's use pattern among the plurality of items from the server 2, and displays the second UI corresponding to the selected item based on the received information when at least one item is selected in accordance with a user's input. The controller 25 may include one or more hardware and/or software components. For example, the controller 25 may include one or more of an integrated circuitry, a dedicated circuit, firmware, and/or a processor such as a central processing unit (CPU) which executes software programs stored in a storage, e.g., a memory. The controller 25 may include a control program for performing the above operations, nonvolatile and volatile memories for storing an entire or a part of the control program, and a microprocessor for executing the control program. The display apparatus 1 may further include a storage 27 to store the first UI and the second UI, and information about a user's use pattern.

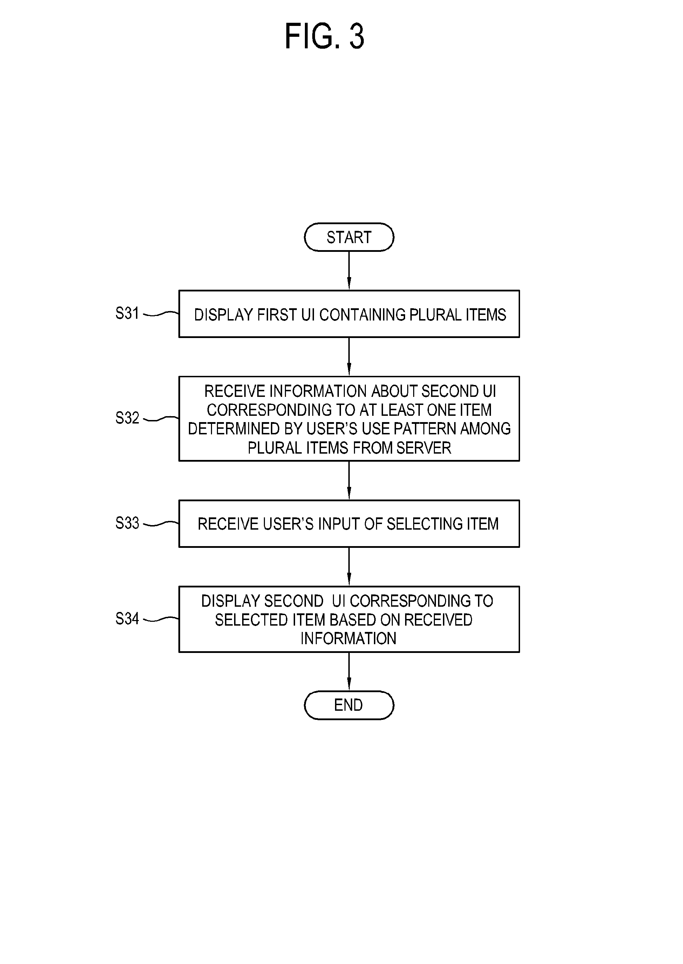

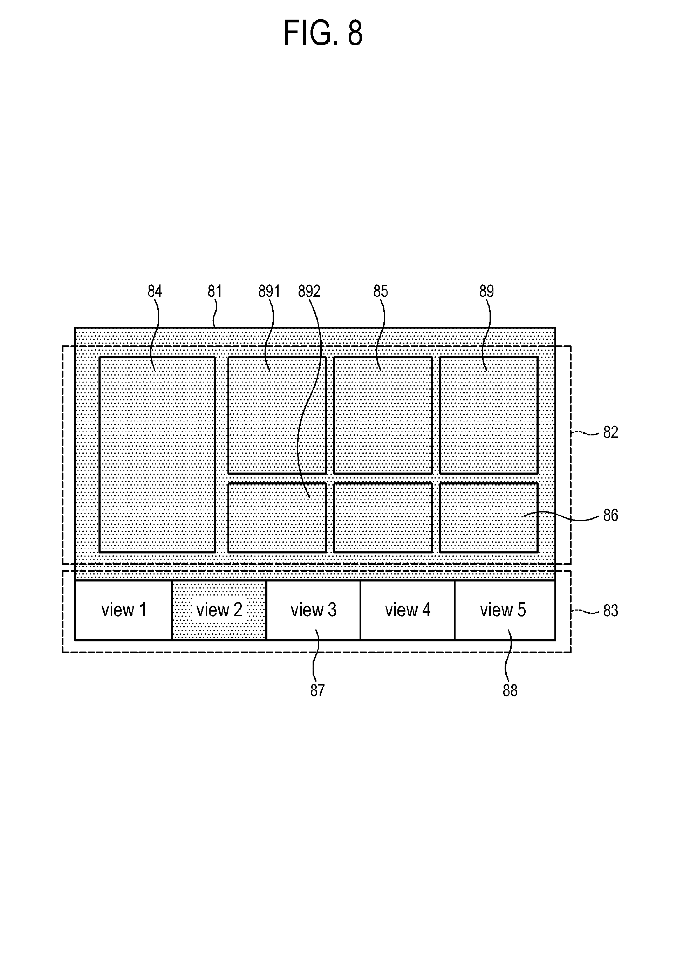

FIG. 3 is a flowchart showing an operation of a display apparatus according to an exemplary embodiment. At operation S31, the display apparatus 1 displays the first UI containing a plurality of items. FIG. 8 shows an example of the first UI displayed by the display apparatus 1 according to an exemplary embodiment. A first UI 81 includes a plurality of items included in a first item group 82 and a second item group 83. Next, at operation S32, the display apparatus 1 receives the information about the second UI corresponding to at least one item determined by a user's use pattern among the plurality of items from the server 2. The display apparatus 1 may, for example, receive the information about the second UI, which corresponds to at least one item (hereinafter, referred to as a 'favorite item') that has been frequently selected by a user among the plurality of items, from the server 2.

Referring to FIG. 8, for example, among the plurality of items, five items that have been frequently selected by a user may include a first item 84, a second item 85, a third item 86, a fourth item 87 and a fifth item 88 in an order of a higher frequency of being selected. In this case, among the plurality of items, the first item 84, the second item 85, the third item 86, the fourth item 87 and the fifth item 88 may be determined as the favorite item. However, the number of favorite items is not limited to five, and may vary depending on embodiments. For example, the number of favorite items may be determined based on communication conditions between the display apparatus 1 and the server 2, performance of the display apparatus 1 or the server 2, etc. The display apparatus 1 may request the server 2 to provide the information about the second UI corresponding to the favorite items among the plurality of items, i.e., corresponding to the first item 84, the second item 85, the third item 86, the fourth item 87 and the fifth item 88. Here, it may be determined by the display apparatus 1 or the server 2 or by both the display apparatus 1 and the server 2 which item is the favorite item among the plurality of items.

Next, referring back to FIG. 3, at operation S33, the display apparatus 1 receives a user's input for selecting an item among the plurality of items. For instance, a user may select one among the favorite items, e.g., the first item 84. Next, at operation S34, the display apparatus 1 displays the second UI corresponding to the favorite item, e.g., the first item 84, selected by a user's input, based on previously received information from the server 2 about the second UI corresponding to the favorite item. For instance, when the user selects the first item 84, the display apparatus 1 may display the second UI based on the previously received information about the second UI corresponding to the first item 84.

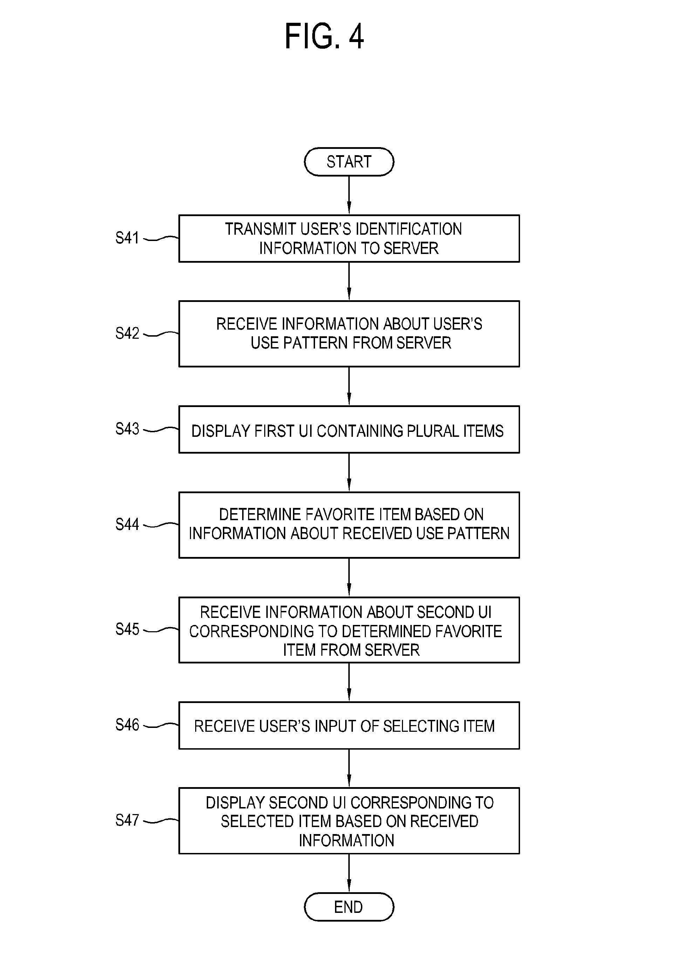

FIG. 4 is a flowchart showing an operation of a display apparatus according to another exemplary embodiment. In an exemplary embodiment, management and determination of the favorite item are performed in the server 2. At operation S41, the display apparatus 1 transmits identification information of a current user to the server 2. The user's identification information may include a user's account information that includes a user's name, identification, a password, etc. Alternatively, the display apparatus 1 may transmit identification information of the display apparatus 1 to the server 2 in addition to or instead of the user's identification information.

Next, at operation S42, the display apparatus 1 receives information about the current user's use pattern from the server 2. The information about the user's use pattern may be provided in the form of a list of favorite items including the information about the user's favorite items. The list of the favorite items may include a plurality of user interfaces, and information about respective favorite items of the user according to the plurality of user interfaces.

Next, at operation S43, the display apparatus 1 displays the first UI 81 as a default operation or in response to a user's input. Next, at operation S44, the display apparatus 1 determines a favorite item with regard to the first UI 81, based on the information about the user's use pattern received from the server 2. For instance, the display apparatus 1 may determine the first item 84, the second item 85, the third item 86, the fourth item 87 and the fifth item 88, which have been frequently selected by the current user, as favorite items with respect to the current first UI 81 among the plurality of UIs contained in the list of favorite items received from the server 2.

Next, at operation S45, the display apparatus 1 requests and receives the information about the second UI corresponding to the determined favorite items, i.e., the first item 84, the second item 85, the third item 86, the fourth item 87 and the fifth item 88, from the sever 2. Next, at operation S46, the display apparatus 1 receives a user's input for selecting an item among the plurality of items. Next, at operation S47, the display apparatus 1 displays the second UI corresponding to a favorite item matching with the item selected by a user's input, based on the previously received information about the second UI corresponding to the determined favorite items from the server 2. In an exemplary embodiment, the display apparatus 1 may transmit the information about a corresponding user and the item selected by the user to the server 2.

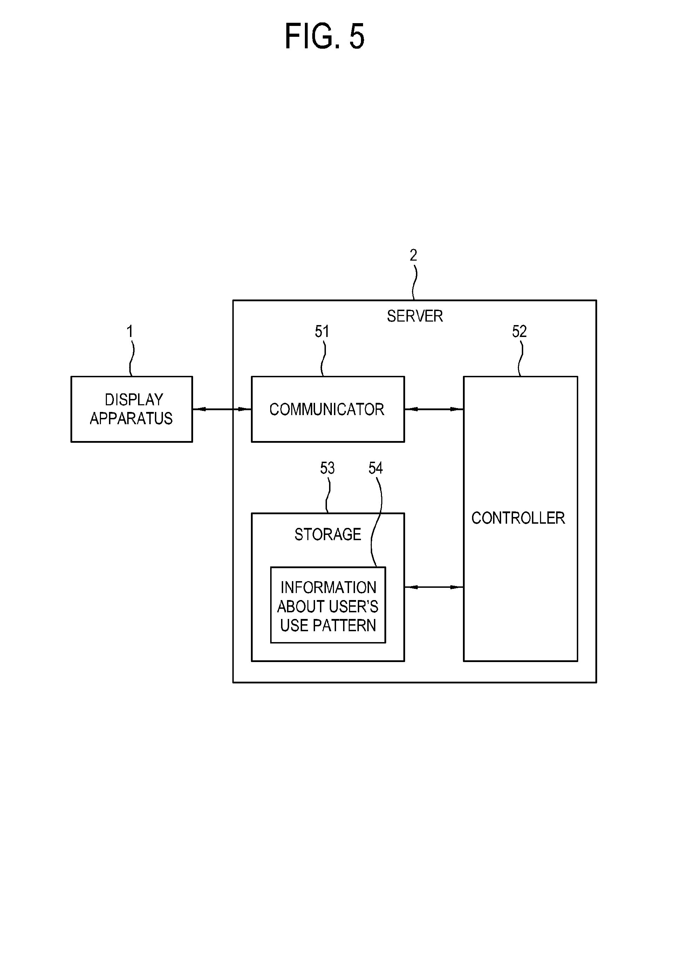

FIG. 5 is a block diagram of a server according to an exemplary embodiment. The server 2 may include a communicator 51, a controller 52, and a storage 53. The communicator 51 performs communication with the display apparatus 1 through a network. The storage 53, which includes a nonvolatile memory, stores information 54 about a use pattern according to a user and a UI and information about a UI containing a plurality of items displayed on the display apparatus 1. The controller 52 manages the information 54 about a user's use pattern. The controller 52 receives a user's identification information from the display apparatus 1, transmits the information 54 about a use pattern of the user corresponding to the user's identification information and the first UI to the display apparatus 1, and transmits the information about the second UI to the display apparatus 1 in response to a request for the second UI from the display apparatus 1. In an exemplary embodiment, the server 2 may include a single server, but is not limited thereto. That is, the number of servers is not limited and may vary. That is, a plurality of servers may be provided according to functions. The plurality of servers may have a plurality of functions, for instance, a function of managing information about a UI configuration, a function of providing data for decorating a real view screen, a function of providing a thumbnail image, a function of collecting log information, etc.

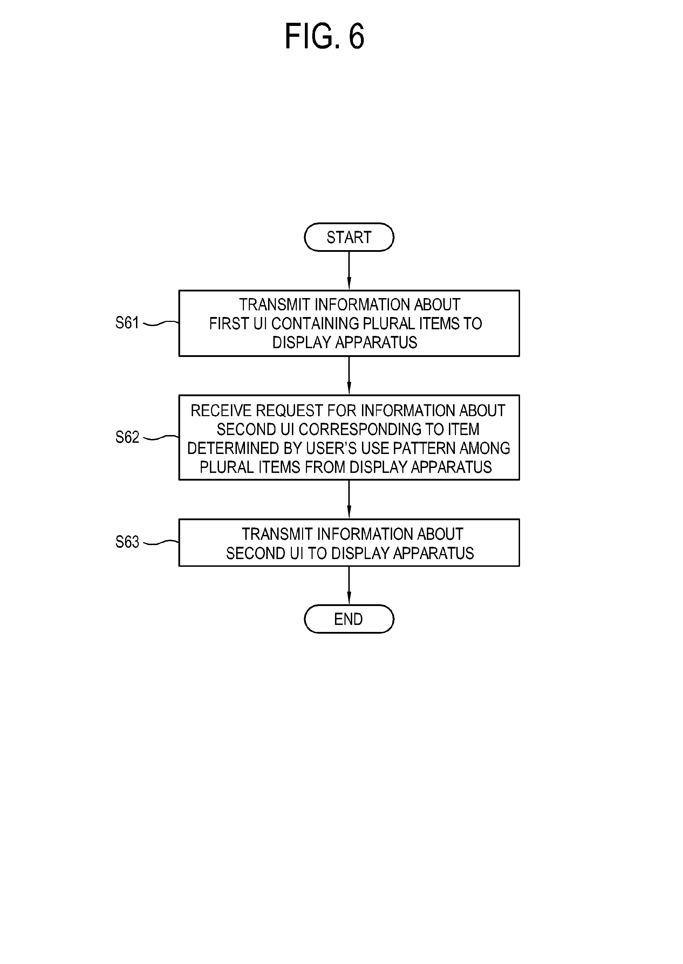

FIG. 6 is a flowchart showing an operation of a server according to an exemplary embodiment. At operation S61, the server 2 transmits the information about the first UI containing the plurality of items to the display apparatus 1. The display apparatus 1 displays the first UI based on the received information about the first UI. Next, at operation S62, the server 2 receives, from the display apparatus 1, a request for the information about the second UI, which corresponds to an item determined by a user's use pattern among the plurality of items contained in the first UI displayed on the display apparatus 1.

In an alternative embodiment, the server 2 may receive a user's identification information from the display apparatus 1. The server 2 may manage the information 54 about the use patterns according to a user of the display apparatus 1. When a user selects an item contained in a UI through the display 1, the server 2 receives the information about the corresponding user and the selected item from the display apparatus 1, and updates the information 54 about the use pattern of the corresponding user with the received information. The information 54 about the user's use pattern may include information about the favorite item with respect to each of the plurality of Uls according to the user. The information 54 about the user's use pattern may be provided in the form of a list. The server 2 may transmit the information 54 about the user's use pattern corresponding to the received identification information to the display apparatus 1. The information 54 about the user's use pattern, transmitted to the display apparatus 1, is used in determining a user's favorite item among the plurality of items contained in the first UI displayed on the display apparatus 1. The display apparatus 1 may request the server 2 to provide the information about the second UI corresponding to the determined favorite item, when the user's favorite item in the first UI is determined.

Next, at operation 63, the server 2 transmits the information about the second UI requested by the display apparatus 1 to the display apparatus 1. Using the information about the second UI received from the server 2, the display apparatus 1 may promptly display the second UI when a user selects the favorite item.

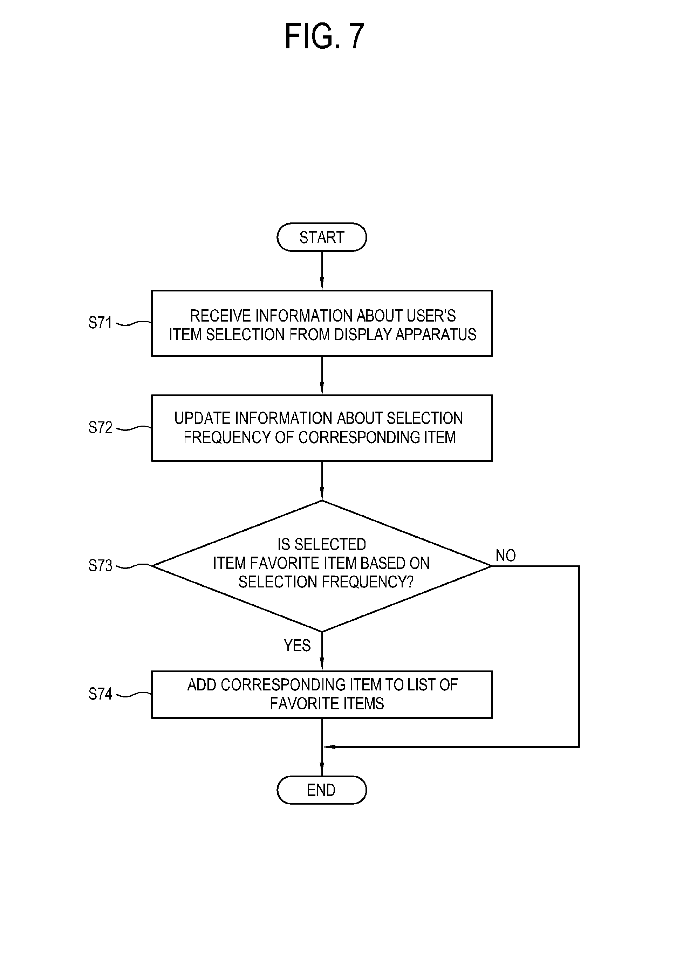

FIG. 7 is a flowchart showing an operation of a server according to another exemplary embodiment. At operation S71, the server 2 receives information about an item selected by a user from the display apparatus 1. The display apparatus 1 may transmit the information about the selected item to the sever 2 whenever a user selects an item on the displayed UI. For instance, referring to FIG. 8, when a user selects a sixth item 89 in the state where the first UI 81 is displayed, the display apparatus 1 may transmit information about the selected sixth item 89 to the server 2. The information about the selected item may further include identification information about the corresponding user. Alternatively, the user's identification information may be transmitted when a user logs in to the display apparatus 1.

Next, at operation S72, the server 2 updates information about a frequency of selecting the corresponding item, based on the received information about the selected item. The information about the frequency of selecting the item may be used for the information 54 about the user's use pattern. The server 2 identifies a user, who selects the item, based on the user's identification information, and updates the information 54 about the use pattern of the corresponding user with a selection frequency of the item currently selected (i.e., a frequency of selecting the item). For instance, when the sixth item 89 is selected on the first UI 81 shown in FIG. 8, the server 2 updates an existing selection frequency of the sixth item 89 in the information 54 about the user's use pattern. For example, the server 2 may increase the selection frequency of the sixth item 89 by one according to selection of the sixth item 89.

Next, at operation S73, the server 2 determines whether the selection frequency of the corresponding item indicates that the selected item corresponds to the favorite item. The determination may be based on, for instance, whether a number of times of selecting the corresponding item is equal to or higher than a preset threshold. Alternatively, the determination may be based on, for instance, whether the selected item is included among a predetermined number of items (i.e., a predetermined number of favorite items) having a higher frequency of being selected on the corresponding UI. Based on a result of determination, at operation S74, the server 2 adds the selected item to the list of user's favorite items with regard to the corresponding UI.

When all the favorite items are determined with respect to the corresponding UI, the server 2 determines whether a list of the favorite items are updated or at least one of the favorite items is replaced by an item currently selected. For instance, the first UI 81 shown in FIG. 8 has five favorite items, e.g., the first item 84, the second item 85, the third item 86, the fourth item 87 and the fifth item 88, according to a frequency of being selected by a user. That is, the first to the fifth items 84 to 88 are items most frequently selected by a user on the first UI 81, among which the fifth item 88 has a lowest frequency of being selected. When the selection frequency of the sixth item 89 increased by one in response to current selection of the sixth item 89 is lower than the selection frequency of the fifth item 88, the server 2 stops managing the user's use pattern with respect to the sixth item 89. When the selection frequency of the sixth item 89 currently selected is equal to or higher than the selection frequency of the fifth item 88, at operation 74, the server 2 may add the sixth item 89 currently selected to the favorite items or determines the sixth item 89 as the favorite item which replaces the fifth item 88. In this case, the server 2 adds the sixth item 89 to the list of the favorite items with respect to the first UI 81.

When the display apparatus 1 receives the information about the second UI corresponding to at least one favorite item from the server 2 (refer to the operation S32 of FIG. 3), the display apparatus 1 may receive at least a part of information for configuring the second UI. For instance, the display apparatus 1 may receive data for providing a screen of the second UI. When the display apparatus 1 needs to display the second UI, the second UI is displayed based on the previously received data. Also, the display apparatus 1 may additionally receive information about a plurality of items contained in the second UI from the server 2, and display the plurality of items. Thus, an amount of information about the second UI to be previously received by the display apparatus 1 may be reduced, such that a memory capacity of the display apparatus 1 for storing the information about the second UI may be reduced. Alternatively, when the item of the second UI includes an image, the display apparatus 1 may receive only a source address (i.e., uniform resource locator (URL)) of the corresponding image. When the display apparatus 1 needs to display the second UI, the display apparatus 1 may receive and display the image through the source address. According to another exemplary embodiment, the display apparatus 1 may exclude information updated in real time from the information about the second UI. For instance, the information about the second UI to be received by the display apparatus 1 may not include a real time message related to a user's social network service (SNS).

In addition to or separately from how frequently a certain item is selected as described above, another condition may be considered in determining a user's use pattern. For instance, when a plurality of items are provided in different forms of a menu, the user's use pattern may be related to whether an item is included in a menu having a user's favorite form. Specifically, referring back to FIG. 8, the first item group 82 and the second item group 83 may have menu forms comprising a thumbnail image and a tab menu, respectively. In this case, a user's use pattern may be related to whether the user prefers a menu form of the first item group 82 or a menu form of the second item group 83. When the user prefers the menu form of the first item group 82, the information about the second UI corresponding to the first item group 82 may be preferentially received over the second item group 83. According to another exemplary embodiment, a user's use pattern may be related to whether an item corresponds to a function preferred by the user among a plurality of functions provided by the display apparatus 1. For instance, the fourth item 87 and the fifth item 88 shown in FIG. 8 may respectively correspond to a recommended movie viewing function and a recently released movie viewing function, and when a user prefers the recommended movie viewing function, the information about the second UI corresponding to the fourth item 87 of the recommended movie viewing function may be preferentially received over the fifth item 88 of the recently released movie viewing function. According to another exemplary embodiment, a user's use pattern may be related to whether an item corresponds to contents preferred by the user. For instance, a seventh item 891 and an eighth item 892 shown in FIG. 8 may respectively correspond to an action movie and a comedy movie, and when a user prefers the action movie, the information about the second UI corresponding to the seventh item 891 of the action movie may be preferentially received over the eighth item 892 of the comedy movie. The above methods are only examples and exemplary embodiments are not limited thereto. Also, the user's use pattern may be determined by considering one of foregoing conditions or a combination of two or more foregoing conditions.

As described above, according to exemplary embodiments, a UI corresponding to an item selected by a user may be more quickly displayed, thereby improving a user's convenience.

Exemplary embodiments may also be implemented through computer-readable recording media having recorded thereon computer-executable instructions such as program modules that are executed by a computer. Computer-readable media may be any available media that can be accessed by a computer and include both volatile and nonvolatile media and both detachable and non-detachable media. Examples of the computer-readable media may include a read-only memory (ROM), a random-access memory (RAM), a compact disc (CD)-ROM, a magnetic tape, a floppy disk, an optical data storage device, etc. Furthermore, the computer-readable media may include computer storage media and communication media. The computer storage media include both volatile and nonvolatile and both detachable and non-detachable media implemented by any method or technique for storing information such as computer-readable instructions, data structures, program modules or other data. The communication media typically embody computer-readable instructions, data structures, program modules, other data of a modulated data signal such as a carrier wave, or other transmission mechanism, and they include any information transmission media.

Although a few exemplary embodiments have been shown and described, it would be appreciated by those skilled in the art that changes may be made in these exemplary embodiments without departing from the principles and spirit of the disclosure, the scope of which is defined in the claims and their equivalents.

## Claims

1. A display apparatus comprising:
an image processor configured to process an image;
a display configured to display the processed image;
a communicator configured to communicate with a server;
a user input receiver configured to receive an input from a user; and
a controller configured to control the display to display a first user interface (UI) containing a plurality of items, receive information about a second UI corresponding to at least one item determined by a use pattern of the user among the plurality of items from the server, and when an item included in the at least one item is selected according to the input from the user, control the display to display the second UI corresponding to the selected item based on the received information.

2. The display apparatus according to claim 1, wherein the at least one item determined by the use pattern comprises an item relatively frequently selected by the user among the plurality of items.

3. The display apparatus according to claim 1 or 2, wherein the plurality of items are provided in a form of a menu, and
the at least one item determined by the use pattern comprises an item included in a menu having a form preferred by the user.

4. The display apparatus according to one of claims 1 to 3, wherein the display apparatus performs a plurality of functions, and
the at least one item determined by the use pattern comprises an item of a function preferred by the user.

5. The display apparatus according to one of claims 1 to 4, wherein the first UI and the second UI respectively comprise information about contents, and
the at least one item determined by the use pattern comprises an item of contents preferred by the user.

6. The display apparatus according to one of claims 1 to 5, wherein the communicator transmits identification information of the user to the server, and receives information about the use pattern of the user from the server, and
the controller determines the at least one item based on the received information about the use pattern.

7. A method of controlling a display apparatus, the method comprising:
displaying a first user interface (UI) containing a plurality of items on a display;
receiving information about a second UI corresponding to at least one item determined by a use pattern of a user among the plurality of items from the server;
receiving an input from the user to select an item included in the at least one item; and
displaying the second UI corresponding to the selected item based on the received information.

8. The method according to claim 7, wherein the at least one item determined by the use pattern comprises an item relatively frequently selected by the user among the plurality of items.

9. The method according to claim 7 or 8, wherein the plurality of items are provided in a form of a menu, and
the at least one item determined by the use pattern comprises an item included in a menu having a form preferred by the user.

10. The method according to one of claims 7 to 9, wherein the display apparatus performs a plurality of functions, and
the at least one item determined by the use pattern comprises an item of a function preferred by the user.

11. The method according to one of claims 7 to 10, wherein the first UI and the second UI respectively comprise information about contents, and
the at least one item determined by the use pattern comprises an item of contents preferred by the user.

12. The method according to one of claims 7 to 11, further comprising:
transmitting identification information of the user to the server;
receiving information about the use pattern of the user from the server; and
determining the at least one item based on the received information about the use pattern.

13. A server comprising:
a communicator configured to communicate with a display apparatus; and
a controller configured to transmit information about a first user interface (UI) containing a plurality of items to the display apparatus, and in response to a request from the display apparatus for information about a second UI corresponding to at least one item determined by a use pattern of a user among the plurality of items, transmit the information about the second UI to the display apparatus.

14. The server according to claim 13, wherein the at least one item determined by the use pattern comprises an item relatively frequently selected by the user among the plurality of items.

15. A method of controlling a server, the method comprising:
transmitting information about a first user interface (UI) containing a plurality of items to a display apparatus;
receiving a request for information about a second UI corresponding to at least one item determined by a use pattern of a user among the plurality of items from the display apparatus; and
transmitting the second UI to the display apparatus.
